# EUROPÄISCHE PATENTSCHRIFT

(11) **EP 0 744 218 B1**
(45) Veröffentlichungstag und Bekanntmachung des Hinweises auf die Patenterteilung: **22.01.2003**
(21) Anmeldenummer: 96104463.3
(22) Anmeldetag: 21.03.1996
(51) Int. Cl.: B05B 15/04, B05B 13/06

(54) **Verfahren und Vorrichtung zur Innenbeschichtung von Behälterzargen**
Process and device for the internal coating of can bodies
Procédé et appareil pour le revêtement intérieur des corps de boîte

(30) Priorität: 12.05.1995 CH 137995
(43) Veröffentlichungstag der Anmeldung: 27.11.1996
(73) Patentinhaber: ELPATRONIC AG, 8962 Bergdietikon (CH)
(72) Erfinder: Nussbaumer, Hans-Jörg, 8646 Wagen (CH); Huber, Guido, 8834 Schindellegi (CH); Walser, Felix, 8340 Hinwil (CH)

(56) Entgegenhaltungen:
- EP-A- 0 382 028
- EP-A- 0 426 258
- EP-A- 0 578 332
- DE-A- 2 724 031
- DE-A- 3 718 625
- DE-A- 3 932 312
- US-A- 3 995 586
- US-A- 4 615 296

## Beschreibung

Die Erfindung betrifft ein Verfahren zur Innenbeschichtung von in einer Reihe aus einer Schweissmaschine austretenden Behälterzargen. Ferner betrifft die Erfindung eine Vorrichtung zur Innenbeschichtung von in einer Reihe aus einer Schweissmaschine austretenden Behälterzargen.

Die Innenbeschichtung von Behältern oder Behälterzargen mit flüssigen oder pulverförmigen Lacken ist bekannt. Besondere Probleme stellen sich bei der Beschichtung von Behälterzargen, insbesonders Dosenzargen, die in einer Reihe aus einer Schweissmaschine austreten, in welcher die Längsnaht der Zargen verschweisst worden ist. Zur Abdeckung lediglich der Schweissnaht ist es bereits bekannt, z.B. aus DE-A-37 18 625, Beschichtungsmaterial durch die Schweissmaschine hindurch zu fördern und auf die Schweissnaht aufzutragen. Bei der Beschichtung der ganzen Behälterinnenwandung, bekannt aus EP-A-0 426 258, ergeben sich aber Probleme, da der Abscheidungsgrad nur ca. 60 % beträgt, bzw. da ca. 40 % des Beschichtungsmaterials in Form eines Nebels aus Pulver- oder Flüssigkeitsteilchen nicht in der Behälterzarge verbleibt, sondern aus dieser Austritt und die Förderlinie und deren Umgebung veschmutzt. Als Anhaltspunkt für diese Verschmutzung kann z.B. angegeben werden, dass zur Beschichtung nur der Schweissnaht an der Innenwandung der Dosenzarge einer ½ kg-Dose von 114 mm Länge ca. 100 mg pulverförmiges Beschichtungsmaterial versprüht werden müssen, wovon beim angegebenen Abscheidungsgrad 40 mg in die Umgebung gelangen. Bei einer Tagesfertigung von 500'000 Dosen ergibt dies eine erhebliche Pulvermenge, die an die Umgebung abgegeben wird und trotz Rezyklierung durch eine Aussenabsaugung z.B. die Lager der Förderlinie und sogar der Schweissmaschine beschädigen kann. Soll nun die Zarge über deren gesamten Umfang, d.h. 360° innenbeschichtet werden, ist mit der mehrfachen Pulvermenge zu rechnen. Aus DE-A-27 24 031 ist es bekannt, beim Innenbeschichten von Rohren eine Rückabsaugung von Beschichtungsmaterial vorzunehmen. EP-A-0 382 028 zeigt eine Rückabsaugung beim Beschichten einseitig geschlossener Behälter.

Der Erfindung liegt deshalb die Aufgabe zugrunde, ein Verfahren zur Beschichtung der gesamten Innenwände über den gesamten Umfang von Behälterzargen zu schaffen, das die erwähnten Nachteile nicht aufweist.

Dies wird bei einem Verfahren der eingangs genannten Art mit den kennzeichnenden Merkmalen des Anspruchs 1 erreicht.

Dadurch, dass in der Zarge selber eine Absaugung von versprühtem Material erfolgt, kann die Verschmutzung der Umgebung durch das Beschichtungsmaterial wirksam vermieden werden, da nur noch wenig Material über die Aussenabsaugung entfernt werden muss. Entsprechend verringert sich die Menge des durch die Aussenabsaugung fehlerhaft nicht entsorgten Materials, was die Aussenverschmutzung entscheidend entschärft. Das entsprechende Material wird zurückgefördert und kann entsorgt oder wiederverwendet werden. Die Kammer bewirkt dabei einen homogenen Austritt des Beschichtungsmaterials aus der Düse.

Vorzugsweise wird ferner der Abstand benachbarter Zargen im Beschichtungsbereich gegenüber dem normalen Förderabstand verringert, z.B. durch Bremsung vorlaufender Zargen; durch diese weitere Massnahme kann das Austreten von Beschichtungsmaterial durch die Zwischenräume aufeinanderfolgender zargen noch einmal vermindert werden.

Der Erfindung liegt weiter die Aufgabe zugrunde eine Vorrichtung zur Innenbeschichtung von Behälterzargen zu schaffen, bei welcher die geschilderten Nachteile verringert oder vermieden werden können. Dies wird bei der eingangs genannten Vorrichtung durch die kennzeichnenden Merkmale des Anspruchs 6 erreicht. Durch vermehrt gleichförmigen Auftrag über den Umfang wird die Menge an zurückzufördernden Pulvers verringert. Dies erzeugt vorzugsweise ein rotierender Sprühkopf. Andererseits kann vorgesehen werden, am Ort der Schweissnaht geringfügig mehr Pulver aufzubringen, um die Stufe einwandfrei zu decken.

Im folgenden werden Ausführungsbeispiele der Erfindung anhand der Zeichnungen näher erläutert. Dabei zeigt
Figur 1 eine Vorrichtung zur Innenbeschichtung von Dosenzargen in grobschematischer Form zusammen mit der entsprechenden Anlage zur Formung und Schweissung der Dosenzargen;
Figur 2 eine erste Ausführungsform des Sprühund Saugkopfes; und
Figur 3 eine weitere Ausführungsform eines Sprüh- und Saugkopfes.

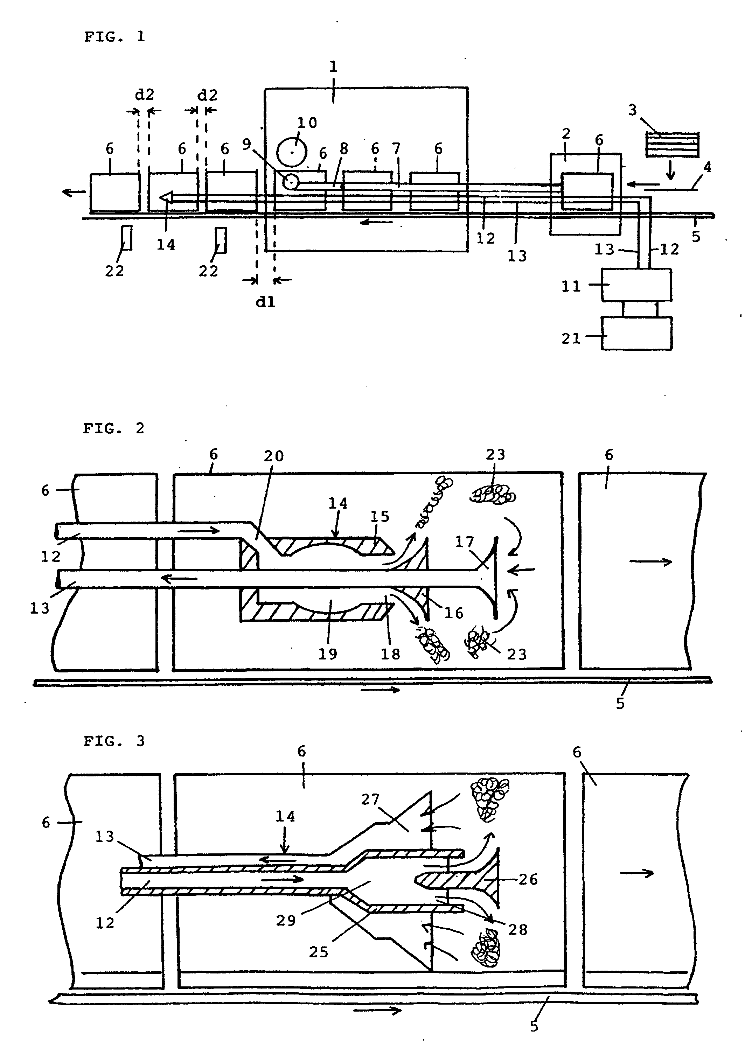

In Figur 1 ist in stark schematisierter Form eine Anlage zur Herstellung von Dosenzargen gezeigt, welche auch eine Vorrichtung zur Innenbeschichtung gemäss der Erfindung umfasst. Die Anlage umfasst eine Schweissmaschine 1, in welcher die Längsnähte der Dosenzargen auf bekannte Weise geschweisst werden. Die Zuführung von Dosenzargen zu der Schweissmaschine erfolgt auf bekannte Weise, indem von einem Stapel 3 mit ebenen Blechen einzelne Bleche 4 abgenommen und auf eine Fördereinrichtung 5 verbracht werden. Die Fördereinrichtung 5 fördert die Bleche in einen Rundapparat 2, in welchem eine Rundung des ebenen Bleches zu einer Dosenzarge 6 erfolgt. Vom Rundapparat 2 wird die Dosenzarge in die Schweissmaschine geführt, wo mit einer entsprechenden Schiene 7 (sogenannte Z-Schiene) die Dosenzarge so geführt wird, dass eine Schweissnaht, in der Regel eine Ueberlappungsschweissnaht, mittels der Schweissrollen 10 und 9 auf bekannte Weise erzeugt werden kann. Die untere Schweissrolle 9 ist dabei an einem Schweissarm 8 angeordnet, welcher wie auch die Z-Schiene 7 in der Zarge befindlich ist. Zur Schweissung werden in der Regel nicht dargestellte Drahtelektroden verwendet. Die geschweissten Dosenzargen treten auf der Fördereinrichtung 5 aus der Schweissmaschine 1 aus. Gemäss der Erfindung ist nun eine Vorrichtung zur Beschichtung der Innenwandung der geschweissten Dosenzargen vorgesehen. Dabei wird nicht nur der Schweissnahtbereich beschichtet, sondern die gesamte Dosenzargeninnenwandung. Zu diesem Zweck ist eine Aufbereitungs- und Pumpeinrichtung 11 für das Beschichtungsmaterial vorgesehen, welches in einem Tank 21 gespeichert sein kann. Das Beschichtungsmaterial selber ist ein bekanntes handelsübliches Beschichtungspulver, welches nach dem Versprühen auf die Innenwandung der Dosenzarge dort aufschmilzt und nach dem Abkühlen eine Beschichtung bildet. Das Aufschmelzen kann durch die Schweissrestwärme der Dosenzarge erfolgen und/oder es kann eine separate Heizung vorgesehen sein. Dies ist an sich bekannt und wird nicht weiter dargestellt. Anstelle eines pulverförmigen Beschichtungsmaterials könnte auch ein flüssiges Beschichtungsmaterial vorgesehen sein. Gemäss der Erfindung wird das Beschichtungsmaterial schweissmaschinenseitig in die Dosenzarge zugeführt, d.h. die Leitung zur Zuführung des Beschichtungsmaterials kommt von der Schweissmaschine her. Dies bedingt eine Einführung dieser Leitung bereits bei der Bildung der Rundung der Dosenzarge und die Durchführung der Leitung innerhalb der gerundeten und geschweissten Zargen durch die Schweissmaschine hindurch. Gemäss der Erfindung ist dabei einerseits eine Zuführleitung 12 für das Beschichtungsmaterial vorgesehen und andererseits eine Rückführleitung 13, durch welche ein Teil des versprühten Beschichtungsmaterials wieder zurück durch die Schweissmaschine hindurch abgesaugt wird. Im gezeigten Beispiel erfolgt die Absaugung durch dieselbe Einrichtung 11, die auch die Zuführung bewirkt. Dies muss aber nicht der Fall sein. Das überflüssige, abgesaugte Beschichtungsmaterial wird erneut dem Tank 21 zugeführt und somit erneut verwendet. In der Dosenzarge selber ist ein Sprüh- und Saugkopf 14 vorgesehen, der mit den Leitungen 12 und 13 verbunden ist.

Gemäss einer bevorzugten Ausführungsform sind weiter an der Fördereinrichtung Elemente 22 vorgesehen, welche den Zargenabstand im Beschichtungsbereich, d.h. nach dem Wegtransport aus der Schweissmaschine verringern, indem die Geschwindigkeit der vorlaufenden Dose verringert wird, so dass die nachlaufende aufholt und sich der Dosenabstand verringert. In Figur 1 ist das dadurch schematisch dargestellt, dass der Zargenabstand vor dem Beschichtungsbereich jeweils die Grösse d1 aufweist und im Beschichtungsbereich die geringere Grösse d2. Am Ort der Schweissung kann der Abstand kleiner sein, z.B. bis 0,8 mm oder weniger. Dies kann z.B. durch die nur schematisch angedeuteten Bremselemente 22 erfolgen, welche jeweils die Dosenzargen 6 vor und nach dem Beschichtungsbereich gegenüber der Fördereinrichtung 5 geringfügig abbremsen, so dass ein Aufschliessen der nachfolgenden, gerade aus der Schweissmaschine austretenden Dosenzarge 6 erfolgt. Der geringere Zargenabstand d2 ergibt ein geringeres Austreten von überschüssigem Beschichtungsmaterial, das von der Absaugung nicht erfasst worden ist. Dadurch ergibt sich eine weitere Verbesserung des erfindungsgemässen Verfahrens bzw. der Vorrichtung. Natürlich kann die Abstandsverringerung auch auf andere Weise erzeugt werden, indem z.B. zwei verschiedene Förderanlagen für die Dosenzargen in dem Beschichtungsbereich und die Dosenzargen vor dem Beschichtungsbereich vorgesehen sind, welche mit verschiedenen Geschwindigkeiten laufen. Natürlich sind auch weitere Modifikationen der in Figur 1 gezeigten Anlage ohne weiteres möglich und ohne von der Erfindung abzuweichen. Es können andere Schweissmaschinen, andere Fördereinrichtungen und andere Varianten zur Formung und Zufuhr der Bleche 4 gewählt sein.

Figur 2 zeigt ebenfalls in schematischer und teilweise geschnittener Darstellung eine erste beispielhafte Ausführungsform des Sprüh- und Saugkopfes 14. Bei dieser Ausführungsform weist der Kopf 14 einen ersten Sprühteil 15 auf, der mit einem zweiten Sprühteil 16 zusammenwirkend eine Sprühdüse 18 bildet. Die Sprühdüse kann dabei eine einzige ringförmige Düse 18 sein oder es können mehrere ringförmig angeordnete Oeffnungen vorhanden sein. Die Düse 18 wird von der Leitung 12 gespiesen, welche das Beschichtungsmaterial zuführt, und welche in dem gezeigten Beispiel schräg zur Förderrichtung verlaufend in den Sprühteil 15 mündet und dort in eine Kammer 19 gelangt. Die entsprechende Ausbildung mit der schräg einmündenden Leitung 12 und der Kammer kann eine besonders gute Verwirbelung des pulverförmigen Beschichtungsmaterials bewirken und damit einen homogenen Austritt dieses Beschichtungsmaterials aus der Düse 18. Natürlich ist die gezeigte Ausführungsform in dieser Hinsicht nur als Beispiel zu verstehen und es sind viele verschiedene Abwandlungen des eigentlichen Sprühteils 15, 16, 19 und 20 möglich, die ebenfalls eine möglichst gleichmässigen Abgabe von Beschichtungsmaterial an die gesamte Innenwandung der Dosenzarge 6 bewirken. So z.B., wenn der konische Sprühteil 16 rotiert. Der Sprüh- und Saugkopf 14 umfasst weiter eine Ansaugöffnung 17, welche mit der Saugleitung 13 verbunden ist. In diese trichterförmige Ansaugöffnung 17 wird Beschichtungsmaterial angesaugt, welches sich nicht an der Zargeninnenwandung niedergeschlagen hat und welches als Sprühnebel frei in der Zarge vorkommt. Die Absaugung mit dem Trichter 17 und der Leitung 13 soll dabei möglichst weitgehend verhindern, dass dieser Sprühnebel 23, der in der Zeichnung lediglich angedeutet ist, durch die Abstände der aufeinanderfolgenden Dosenzargen 6 austritt und eine Verschmutzung der Anlage bewirkt. Auch die Ausgestaltung dieses Saugtrichters 17 ist lediglich als Beispiel zu verstehen. Dieser Trichter kann auch grösser oder kleiner gewählt werden oder es kann auf eine trichterförmige Ausgestaltung der Saugöffnung überhaupt verzichtet werden. Die Vorderkante der Saugöffnung kann sich auch in minderem oder grösserem Abstand von der Sprühdüse 18 befinden, wobei sich die für den jeweiligen Fall optimale Ausführung durch Versuche relativ einfach ermitteln lässt. Bei diesem Beispiel erfolgt aber die Absaugung in Zargenförderrichtung gesehen immer nach der Aufsprühung.

Figur 3 zeigt eine weitere Ausführungsform eines Sprüh- und Saugkopfes 14, bei dem die Absaugung in Förderrichtung gesehen vor der Aufsprühung erfolgt. Dabei ist wieder ein Sprühelement 25 vorgesehen, welches zusammen mit einem Element 26 eine Sprühdüse 28 bildet. Auch diese Sprühdüse kann ringförmig sein oder aus einzelnen Oeffnungen bestehen. Die Zuführleitung 12 ist hier geradlinig an das Sprühelement 25, 26 angeschlossen. Auch hier ist, wie im Beispiel gezeigt, eine Kammer 29 vorgesehen, welche eine homogenere Verteilung des Beschichtungsmaterials bewirken kann. Zusätzlich zu der Kammer könnten auch weitere Leitelemente oder Verwirbelungselemente vorgesehen sein, welche eine gewünschte Strömung und Verteilung des Beschichtungsmterials bewirken. Das Absaugelement 27 ist im gezeigten Beispiel ringförmig um das Sprühelement 25 angeordnet und bildet einen Saugtrichter, der mit der Saugleitung 13 verbunden ist. Die genaue Ausgestaltung des Saugelementes 27 und dessen Abstand von der Düse 28 können auch bei diesem Beispiel in vielfältiger Weise variiert werden. Auch diese Sauganordnung bewirkt ein Absaugen des freien, nicht an der Wandung abgeschiedenen Beschichtungsmaterials zurück durch die Leitung 13. Auch die Leitung 13 könnte ringförmig koaxial mit der Leitung 12 ausgebildet sein.

## Patentansprüche

1. Verfahren zur Innenbeschichtung von in einer Reihe aus einer Schweissmaschine austretenden Behälterzargen mit einem Beschichtungsmaterial, wobei das Beschichtungsmaterial schweissmaschinenseitig zugeführt und im Zargeninneren im wesentlichen gleichmässig im gesamten Umfang auf die Innenwandung gesprüht wird, **dadurch gekennzeichnet, dass** eine zargeninnenseitige Rückabsaugung und schweissmaschinenseitige Rückförderung von versprühtem Beschichtungsmaterial erfolgt, wozu ein Sprüh- und Saugkopf (14) mit einer Sprühdüse (18;28) vorgesehen ist und das Beschichtungsmaterial vor dem Versprühen mittels der Sprühdüse in eine im Sprüh- und Saugkopf (14) angeordnete Kammer (19;29) gelangt.

2. Verfahren nach Anspruch 1, **dadurch gekennzeichnet, dass** der gegenseitige Abstand aufeinanderfolgender Zargen im Beschichtungsbereich verringert wird.

3. Verfahren nach Anspruch 1 oder 2, **dadurch gekennzeichnet, dass** das Beschichtungsmaterial in Zargenförderrichtung hinter dem Rückabsaugbereich versprüht wird.

4. Verfahren nach Anspruch 1 oder 2, **dadurch gekennzeichnet, dass** das Beschichtungsmaterial in Zargenförderrichtung vor dem Rückabsaugbereich versprüht wird.

5. Verfahren nach einem der Ansprüche 1 bis 4, **dadurch gekennzeichnet, dass** das Versprühen mittels eines rotierenden Elementes erfolgt.

6. Vorrichtung zur Innenbeschichtung von in einer Reihe aus einer Schweissmaschine (1) austretenden Behälterzargen (6) mit einem Beschichtungsmaterial, **dadurch gekennzeichnet, dass** mindestens eine durch die Schweissmaschine geleitete Zuführleitung (12) für Beschichtungsmaterial und mindestens eine durch die Schweissmaschine geleitete Rückführleitung (13) für Beschichtungsmaterial vorgesehen sind, und dass ein an die Zuführleitung und Rückführleitung angeschlossener, zur Beaufschlagung der Zargeninnenseite über deren gesamten Umfang positionierter Sprüh- und Saugkopf (14) mit einer Sprühdüse (18:28) vorgesehen ist wobei die Zuführleitung (12) im Sprüh- und Saugkopf (14) vor der Sprühdüse (18;28) in eine mit dieser verbundene Kammer (19;29) im Sprüh- und Saugkopf (14) führt.

7. Vorrichtung nach Anspruch 6, **dadurch gekennzeichnet, dass** die Sprühdüse (18) des Sprüh- und Saugkopfes (14) eine oder mehrere Sprühöffnungen aufweist, welche in Zargenförderrichtung vor einer oder mehreren Absaugöffnungen (17) angeordnet sind.

8. Vorrichtung nach Anspruch 6, **dadurch gekennzeichnet, dass** die Sprühdüse (28) des Sprüh- und Saugkopfes (14) eine oder mehrere Sprühöffnungen aufweist, welche in Zargenförderrichtung nach einer oder mehreren Absaugöffnungen (27) angeordnet sind.

9. Vorrichtung nach einem der Ansprüche 6 bis 8, **dadurch gekennzeichnet, dass** eine Einrichtung zur Verminderung des Abstandes aufeinanderfolgender Behälterzargen, insbesondere eine Bremseinrichtung für Zargen, im Bereich des Sprüh- und Saugkopfes vorgesehen ist.

10. Vorrichtung nach Anspruch 6, **dadurch gekennzeichnet, dass** der Sprühkopf zur gleichförmigen Verteilung des Pulvers über den Umfang der Zarge ein rotierendes Element (16, 26) besitzt.

## Claims

1. Process for the internal coating of can bodies, emerging one after the other from a welding machine, with a coating material, the coating material being supplied at the welding-machine end and, in the interior of the can, being sprayed substantially uniformly over the entire inner wall, **characterized in that** sprayed coating material is removed by suction from the interior of the can and returned at the welding-machine end, for which purpose a spray and suction head (14) is provided with a spray nozzle (18; 28) and, prior to the spraying process by means of the spray nozzle, the coating material arrives in a chamber (19; 29) disposed in the spray and suction head (14).

2. Process according to Claim 1, **characterized in that** the distance between successive cans is reduced in the coating area.

3. Process according to Claim 1 or 2, **characterized in that**, in conveying direction of the cans, the coating material is sprayed from behind the suction area.

4. Process according to Claim 1 or 2, **characterized in that**, in conveying direction of the cans, the coating material is sprayed from in front of the suction area.

5. Process according to one of Claims 1 to 4, **characterized in that** the spraying process is effected by means of a rotating element.

6. Apparatus for the internal coating of can bodies (6), emerging one after the other from a welding machine (1), with a coating material, **characterized in that** provision is made for at least one supply pipe (12) for coating material to run through the welding machine and for at least one return pipe (13) for coating material to run through the welding machine, and **in that** a spray and suction head (14) attached to the supply pipe and return pipe and positioned so as to act upon the entire interior of each can is provided with a spray nozzle (18; 28), the supply pipe (12) leading in the spray and suction head (14) into a chamber (19; 29) in the spray and suction head (14) ahead of the spray nozzle (18; 28) said chamber being connected to said spray nozzle (18; 28).

7. Apparatus according to Claim 6, **characterized in that** the spray nozzle (18) of the spray and suction head (14) has one or more spray apertures which, in conveying direction of the cans, are disposed upstream of one or more suction apertures (17).

8. Apparatus according to Claim 6, **characterized in that** the spray nozzle (28) of the spray and suction head (14) has one or more spray apertures which, in conveying direction of the cans, are disposed downstream of one or more suction apertures (27).

9. Apparatus according to one of Claims 6 to 8, **characterized in that** a mechanism for reducing the distance between successive can bodies, in particular a brake mechanism for slowing down the cans, is provided in the region of the spray and suction head.

10. Apparatus according to Claim 6, **characterized in that** the spray head has a rotating element (16, 26) for the uniform distribution of the powder over the area of the can.

## Revendications

1. Procédé pour le revêtement intérieur, avec un matériau de revêtement, de corps de boîte sortant sur une file d'une machine à souder, ledit matériau de revêtement étant amené du côté de la machine à souder et pulvérisé dans l'intérieur du corps de boîte essentiellement uniformément sur tout le pourtour de la paroi interne de celui-ci, **caractérisé en ce qu'**une aspiration de matériau de revêtement pulvérisé est effectuée du côté intérieur du corps de boîte et un refoulement de matériau de revêtement pulvérisé est effectué du côté machine à souder, une tête de pulvérisation et d'aspiration (14) avec une buse de pulvérisation (18, 28) étant prévue et le matériau de revêtement parvenant, avant la pulvérisation au moyen de la buse de pulvérisation, dans une chambre (19, 29) disposée dans la tête de pulvérisation et d'aspiration (14).

2. Procédé selon la revendication 1, **caractérisé en ce que** l'écart entre deux corps de boîte qui se suivent est réduit dans la zone de revêtement.

3. Procédé selon la revendication 1 ou 2, **caractérisé en ce que** le matériau de revêtement est pulvérisé, dans le sens de l'avance des corps de boîte, en aval de la zone d'aspiration.

4. Procédé selon la revendication 1 ou 2, **caractérisé en ce que** le matériau de revêtement est pulvérisé, dans le sens de l'avance des corps de boîte, en amont de la zone d'aspiration.

5. Procédé selon l'une des revendications 1 à 4, **caractérisé en ce que** la pulvérisation est effectuée au moyen d'un élément rotatif.

6. Dispositif pour le revêtement intérieur, avec un matériau de revêtement, de corps de boîte (6) sortant sur une file d'une machine à souder (1), **caractérisé en ce qu'**il est prévu au moins une tuyauterie d'alimentation (12) de matériau de revêtement acheminée à travers la machine à souder et au moins une tuyauterie de recyclage (13) de matériau de revêtement acheminée à travers la machine à souder, ainsi qu'une tête de pulvérisation et d'aspiration (14) raccordée à la tuyauterie d'alimentation et à la tuyauterie de recyclage, positionnée pour garnir la face interne du corps de boîte sur le pourtour de celle-ci, munie d'une buse de pulvérisation (18, 28), la tuyauterie d'alimentation (12) arrivant dans la tête de pulvérisation et d'aspiration (14) en amont de la buse de pulvérisation (18, 28) dans une chambre (19, 29) reliée à ladite buse de pulvérisation dans la tête de pulvérisation et d'aspiration (14).

7. Dispositif selon la revendication 6; **caractérisé en ce que** la buse de pulvérisation (18) de la tête de pulvérisation et d'aspiration (14) présente une ou plusieurs ouvertures de pulvérisation qui sont disposées, dans le sens de l'avance des corps de boîte, en amont d'une ou plusieurs ouvertures d'aspiration (17).

8. Dispositif selon la revendication 6, **caractérisé en ce que** la buse de pulvérisation (28) de la tête de pulvérisation et d'aspiration (14) présente une ou plusieurs ouvertures de pulvérisation qui sont disposées, dans le sens de l'avance des corps de boîte, en aval d'une ou plusieurs ouvertures d'aspiration (27).

9. Dispositif selon l'une des revendications 6 à 8, **caractérisé en ce qu'**un dispositif pour réduire l'écart entre deux corps de boîte qui se suivent est prévu, en particulier un dispositif de freinage pour corps de boîte, dans la zone de la tête de pulvérisation et d'aspiration.

10. Dispositif selon la revendication 6, **caractérisé en ce que** la tête de pulvérisation possède un élément rotatif (16, 26) pour une répartition uniforme de la poudre sur le pourtour des corps de boîte.
